(19) **Europäisches Patentamt / European Patent Office / Office européen des brevets**

(11) **EP 4 604 074 A1**

(12) **EUROPEAN PATENT APPLICATION**

(43) Date of publication:
**20.08.2025 Bulletin 2025/34**

(21) Application number: **24157953.1**

(22) Date of filing: **15.02.2024**

(51) International Patent Classification (IPC):
**G06V 10/40** (2022.01)   **G06V 10/82** (2022.01)
**G06V 20/10** (2022.01)

(52) Cooperative Patent Classification (CPC):
**G06V 10/82; G06V 10/40; G06V 20/10;**
G06F 2218/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Khoreva, Anna**
  **70197 Stuttgart (DE)**
• **Li, Yumeng**
  **72070 Tuebingen (DE)**
• **Zhang, Dan**
  **71229 Leonberg (DE)**

Remarks:
Amended claims in accordance with Rule 137(2) EPC.

(54) **TECHNIQUE FOR EXTRACTING FEATURES OF AN ENVIRONMENT FROM IMAGE DATA**

(57)   A technique for extracting features of an environment from image data is provided. A computer implemented method comprises a step of receiving data indicative of a visual domain (804) of an environment and a step of generating a visual domain textual prompt (812) based on the received data indicative of the visual domain of the environment (804). The method further comprises a step of receiving image data representative of the environment. The method further comprises a step of extracting, in particular local, features of the environment (826) from the received image data. The extracting of the, in particular local, features is performed by a conditional feature extracting model (814, 822). The extracting of the, in particular local, features (826) is conditioned by the generated visual domain textual prompt (812).

Fig. 8

## Description

A technique for extracting features of an environment from image data and a technique for training a conditional feature extracting model for extracting (in particular local) features of the environment from the image data are provided. The techniques comprise methods, computing devices, a system, a computer program product, and a computer readable storage medium.

Prior Art

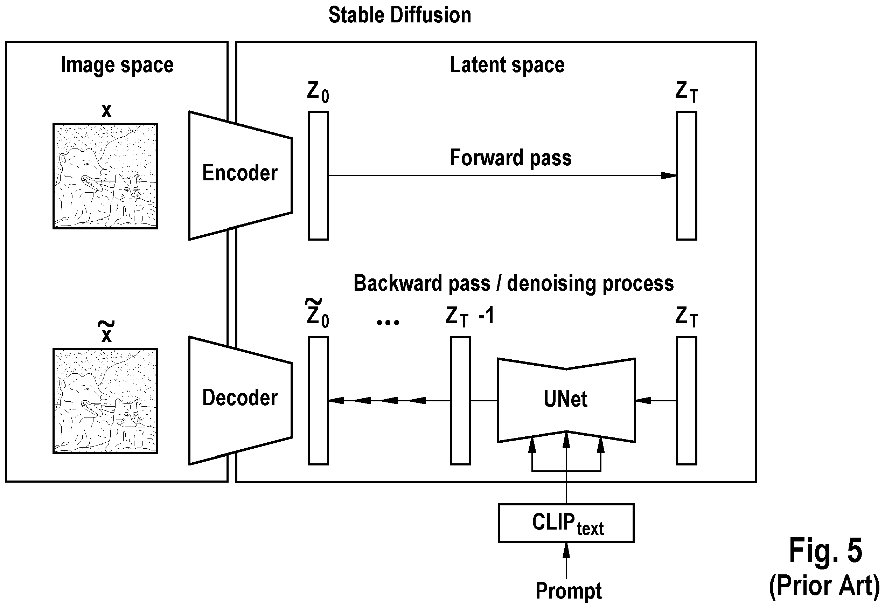

Recent large-scale text-to-image generative models, e.g., Stable Diffusion (SD, as described by R. Rombach et al. in "High-Resolution Image Synthesis with Latent Diffusion Models", arXiv:2112.10752v2 [cs.CV], which is incorporated herein by reference), trained on a large amount of text-image pairs, have demonstrated an impressive performance and ability to generate diverse and creative images given a text prompt. In particular, SD is the state-of-the-art open-source vision-language generative model trained over billions of text-image pairs. SD is a latent diffusion model, which is a special case of the diffusion model trained in a certain latent space instead of the original image space. More specifically, following P. Esser et al., "Taming Transformers for High-Resolution Image Synthesis", arXiv:2012.09841 v3 [cs.CV] (known for short also as VQ-GAN), which is incorporated herein by reference, and as schematically illustrated in Fig. 5, SD firstly trains an autoencoder, where the image is encoded into the latent space Z, and decoded back to reconstruct the given image. In a second stage, a diffusion model is trained in this latent space Z. Due to being trained on a large amount of data, SD has a learned rich representation.

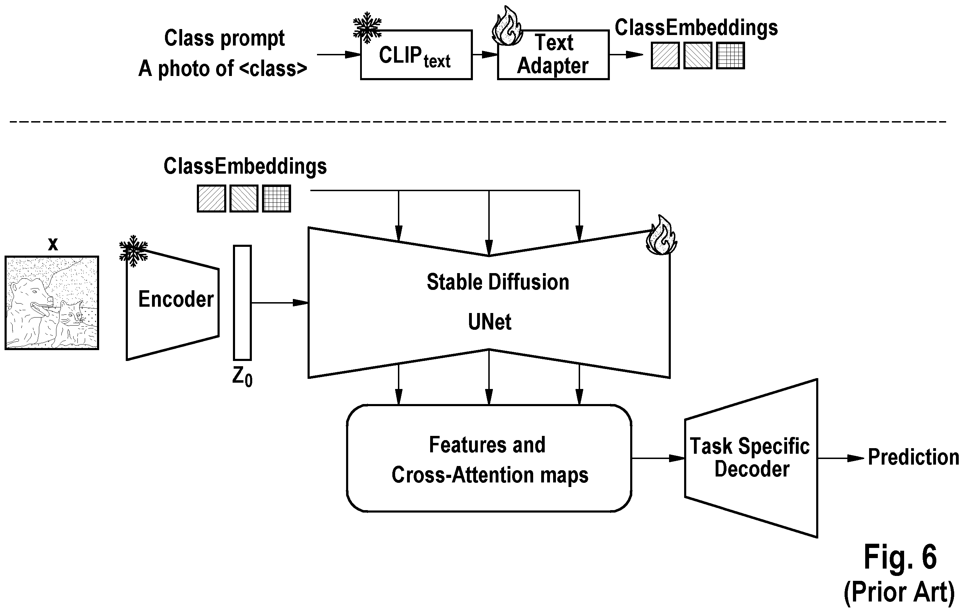

Recent work by W. Zhao et al. in "Unleashing Text-to-Image Diffusion Models for Visual Perception (VPD)", arXiv:2303.02153v1 [cs.CV], which is incorporated herein by reference, is built on top of SD and exploits the pretrained knowledge of a denoising UNet to provide semantic guidance in various visual perception tasks, e.g., semantic segmentation, and depth estimation. W. Zaho et al. explored to fine-tune SD and simultaneously train a task-specific decoder for various visual perception tasks (e.g., semantic segmentation, depth estimation), as schematically shown in Fig. 6.

However, SD is finetuned by W. Zaho et al. on a specific training set and only evaluated in the same trained domain at inference time.

Disclosure of the Invention

In the following, the techniques for extracting features of an environment from image data and for training a conditional feature extracting model for extracting (in particular local) features of the environment from the image data are described with respect to the claimed methods as well as with respect to the claimed computing devices. Features, advantages, or alternative embodiments herein can be assigned to the other claimed objects (e.g., the system comprising a computing device, the computer program or a computer program product), and vice versa. In other words, claims for the computing devices can be improved with features described or claimed in the context of the methods. In this case, the functional features of the method are embodied by structural units of the system and vice versa, respectively.

As to a first method aspect, a computer-implemented method for extracting features of an environment from image data is provided. The method comprises a step of receiving data indicative of a visual domain of an environment. The method further comprises a step of generating a visual domain textual prompt based on the received data indicative of the visual domain of the environment. The method further comprises a step of receiving image data representative of the environment. The method still further comprises a step of extracting (in particular local) features of the environment from the received image data. The extracting of the (in particular local) features is performed by a conditional feature extracting model and is conditioned by the generated visual domain textual prompt.

The method may be used for providing a model for image generation, which may adapt itself flexibly based on the visual domain textual prompt, indicative of the visual domain of the environment.

By the computer-implemented technique, performing feature extraction of an environment from the received image data, and preferably performing a visual perception task based on the extracted features, which is more robust and generalizable to various visual domains (e.g., different weather condition, lighting conditions, and/or new countries) is enabled. Alternatively or in addition, an overfitting to training datasets (e.g., comprising and/or based on the extracted features conditioned by the visual domain textual prompt, in particular as ground truth) for training a model (e.g., a neural network, NN, and/or an artificial intelligence, AI) for performing the feature extraction and/or the visual perception task may be avoided. E.g., an accurate result of the feature extraction and/or of the visual perception task (in particular object detection, depth estimation, classification, and/or semantic segmentation) can be critical for safe automated driving (AD), and/or for safely operating a robot (e.g., in a manufacturing environment, and/or in a home automation).

An AD driving functionality may comprise a full automation (also denoted as autonomous driving, in particular L5), an at least partial (e.g., high, L4, conditional, L3, or partial, L2) automation, and/or an assisted driving automation (e.g.,

L1, e.g., comprising adaptive cruise control, ACC).

Any textual prompt may also be denoted as text prompt and/or language prompt. Alternatively or in addition a textual prompt may be provided and/or processed in a text-based and/or acoustic-based format.

The visual domain textual prompt (also: domain indicator) can improve on the (in particular visual) domain flexibility of the feature extraction and/or the visual perception task (e.g., by using knowledge on an expected underexposure or overexposure).

A (e.g., pretrained) model for performing the feature extraction and/or the visual perception task, which is trained on training datasets (in particular comprising the result of the feature extraction conditioned by the visual domain textual prompt, and/or the result of the visual perception task based on the feature extraction), can be significantly improved, in particular by enabling a transfer of (in particular rich) prior knowledge and/or fast training convergence.

The environment may also be denoted as (in particular physical, real and/or natural) scene, setting, and/or ambience. The environment represented by the received image data may comprise an environment of a (e.g., AD) vehicle, of a robot, of a surveillance system, and/or of a person. In particular, the environment may represent a traffic scene. Alternatively or in addition, the environment may be real, natural, rural, built, urban, and/or spatial. E.g., the environment of the (e.g., AD) vehicle may comprise a road layout, the environment of the robot may comprise a manufacturing site, and the environment of the surveillance system, and/or of the person, may comprise a building structure. E.g., for AD applications, the environment may comprise an outside environment, in particular a street view. Further exemplarily, for a robot, the environment may comprise a factory site having an inside and/or outside area.

The image data representative of the environment may be received as digital (and/or analog) data, in particular from a (e.g., video) camera. Alternatively or in addition, the image data of the environment may be acquired by means of a (e.g., video and/or thermal) camera, radar, LiDAR, ultrasonic sensors, and/or motion sensors.

The visual domain may also be denoted as visibility conditions, optical conditions, and/or may comprise an indication of a visual (also: optical) setting of the environment (e.g., in view of lighting and/or weather conditions). Alternatively, or in addition the visual domain may be generated from a geographical identifier, and/or may be, in particular country-specific, such as lighting conditions based on the time of acquiring the image data relative to local sunrise and sunset times, layout of traffic signs and/or streets for outside environments, and/or types of natural and/or artificial lighting for indoors environments). The lighting conditions (briefly: lighting) may alternatively be denoted as illumination and/or brightness.

The data indicative of the visual domain may comprise digital data, e.g., a result of a brightness determination of imaging data. Alternatively or in addition, the digital data may be converted from a (e.g., manual) input (e.g., a selected brightness and/or weather condition), and/or may be compressed, e.g., in terms of a (in particular manually and/or automatically) selected one of a number of predetermined visual domains (e.g., arranged in a table).

The step of generating the visual domain textual prompt may be performed, at least partly, by a contrastive language-image pretraining (CLIP) encoder. In some embodiments, a pretrained Visual Question Answering (VQA) model, e.g., mPLUG, may first receive the data indicative of the visual domain of the environment and provide a result, in particular as a probability of a visual domain class out of a discrete set of visual domain classes. In one embodiment, the visual domain class with the highest probability may be selected as the visual domain, for which the visual domain textual prompt is generated. In an alternative embodiment, the visual domain, for which the visual domain textual prompt is generated, may correspond to a weighted combination of a number K (e.g., with K=2 corresponding to the two highest probabilities) of visual domain classes with the K highest probabilities.

The conditional feature extracting model may comprise a generative model, and/or a (in particular large-scale) text-to-image generative artificial intelligence (AI).

The extracted features may represent the environment locally. Alternatively or in addition, the extracted features may comprise objects, shapes and/or colors.

Since the feature extraction process is conditioned on the textual prompt indicative of the visual domain, e.g., location and/or country information may be relevant for the extracted feature. E.g., some local traffic signs may be different from location to location, and/or driving on the left-hand side or on right hand side may be used as prior knowledge for the model prediction. The feature extraction may, e.g., additionally be conditioned on an environmental class textual prompt, wherein the environmental class relates to, e.g., the country (e.g., for a typical road layout, and/or positioning and/or appearance of a traffic sign and/or of a traffic light), a rural environment, and/or an urban environment (e.g., in view of typical cultivation and/or buildings).

The (in particular locally) extracted features may be supplemented by cross-attention maps. The cross-attention maps may relate different patches of the (in particular locally) extracted features. Alternatively or in addition, the cross-attention maps can facilitate consistency across the environment comprised in the image data, in particular as a result of a subsequently performed visual perception task.

The extracted features of the environment, optionally supplemented with the cross-attention maps, may be provided for output.

The method may further comprise a step of performing a visual perception task on the received image data, representing the environment, based on the extracted (in particular local) features. The result of the performed visual perception task may comprise an (e.g., weighted) average over features, in particular at different timesteps. Alternatively or in addition, a result of the performed visual perception task may be provided and/or output.

The visual perception task may be performed by a task-specific decoder.

By performing the visual perception task, the environment captured in the image data can be analyzed in a sufficiently accurate manner to enable, e.g., AD, the use of an autonomous robot, and/or access control.

The visual perception task may comprise a depth estimation, an object detection, a classification, and/or a semantic segmentation. So, the method may be used for image classification. Image classification may comprise object detection and segmentation, in particular semantic segmentation. The classification may be based on low level features of the image data, like, e.g. pixels, edges and/or corners.

By the depth estimation, an estimate of a distance (e.g., to an obstacle for an, in particular AD, vehicle, and/or a, in particular autonomous, robot) can be performed. Alternatively or in addition, by the object detection and/or by the classification, the detection of a path, a road surface, a traffic sign, a pedestrian, a vehicle, an (e.g., further) obstacle (e.g., a tree), the sky, and/or a destination is enabled. Further alternatively or in addition, performing the classification allows to recognize, e.g., a traffic sign and/or an obstacle, and plan a path (and/or trajectory) accordingly. Further alternatively or in addition, by the semantic segmentation, the (e.g., full) semantic content of the environment can be provided and the path (and/or trajectory) planning of the (e.g., AD) vehicle and/or the (e.g., autonomous) robot can be improved in accuracy, in particular depending on a real-time situation of the environment.

Alternatively or in addition, the visual perception task may comprise, e.g., performing a regression analysis to determine a (in particular continuous) value, such as a distance (e.g., according to the depth estimation), a speed (also: velocity), an acceleration, and/or tracking an object and/or a person, in particular by taking into account edges and/or pixel attributes for image data, and/or by analyzing (in particular image) data, e.g., scalar time series, for performing the corresponding measurements (e.g., of the speed and/or acceleration) and/or for the tracking.

By performing the visual perception task, an anomaly detection, and optionally controlling, e.g., a (in particular AD) vehicle and/or a (in particular autonomous) robot after the anomaly detection in a fail-safe mode can be provided.

E.g., in an embodiment, which is applied to AD, some anomaly may show up on the road, such as described by Dan Zhang et al. in "Anomaly-Aware Semantic Segmentation via Style-Aligned OoD Augmentation", arXiv:2308.09965v1 [cs.CV], which is incorporated herein by reference. E.g., in case an accident happened, "potential debris on the road" may be indicated in the (e.g., environmental class) textual prompt.

Performing the visual perception task on the image data may be conditioned on the generated visual domain textual prompt.

According to some embodiments, the extracting of the (in particular local) features may be performed for multiple timesteps, in particular in relation to generating latent image data with different noise levels (briefly: noisy latents). The visual perception task may be performed based on the combined (and/or aggregated, and/or weighted) extracted features from the multiple timesteps.

Alternatively or in addition, the conditioning on the generated visual domain textual prompt may comprise a conditioning on a combined (and/or aggregated, and/or weighted) visual domain textual prompt associated with multiple timesteps, in particular in relation to generating the latent image data.

The received data indicative of the visual domain may comprise environmental sensor data, position data determined by means of a positioning system (in particular by a satellite navigation system), manually input data, and/or electronically available information data.

The environmental sensor data may be acquired by means of an environmental sensor. The environmental sensor may comprise an optical sensor, an acoustic sensor, a rain sensor, a humidity sensor, a thermal sensor, a temperature sensor, a wind sensor, a radar sensor, a LiDAR sensor, an ultrasonic sensor and/or a motion sensor. Alternatively or in addition, the environmental sensor may be mounted on the (e.g., AD) vehicle, the (e.g., autonomous) robot, and/or may be stationary within the environment. By means of the environmental sensor, information on the visual domain such as a weather condition (e.g., sunny, rainy and/or foggy, in particular using the humidity sensor) and/or a lighting condition (e.g., day, night, dawn, and/or twilight) can be advantageously determined in real time locally for (and/or within) the environment.

The positioning system, in particular the satellite navigation system, may comprise a global navigation satellited system (GNSS), e.g., the global positioning system (GPS) and/or Galileo. Alternatively or in addition, the positioning system may comprise a regional system (e.g., in particular using radio signals), a local positioning system (LPS, e.g., using beacons of radio signals and/or of optical signals, Wi-Fi, and/or Li-Fi), and/or an indoor system (e.g., using ultrasound and/or multilateration, such as Active Bat). By the positioning system, information on the visual domain such as a type of terrain, building development, and/or stationary installations (and thereby, e.g., information as to a lighting setup such as dimming under a bridge and/or in a tunnel) can be advantageously determined for the environment.

The manually input data may be received by means of a user interface (UI), in particular a graphical user interface (GUI), and/or by means of a microphone (and/or an acoustic interface) from a user (also: human operator, e.g., a driver of a, in particular AD, vehicle, and/or an operator of a robot). The manually input data may comprise data selected from a drop-down menu and/or any form of discrete selections (e.g., sunny, foggy, rainy, snowy, and/or dark for lighting conditions). Alternatively or in addition, the manually input data may comprise (e.g., natural language) text indicative of the visual domain. The user can, by means of the manually input data, provide information indicative of the visual domain, in particular based on his/her perception and/or based on reading off information from one or more sensors without the need for a (e.g., wireless and/or wired) data connection of the sensors.

The electronically available information data may be received via a (e.g., wireless and/or wired) interface (in particular via the internet or a cloud-based data storage) and/or may comprise data retrieved from the internet, e.g., a local weather forecast. Thereby, a wide range of, in particular already existing, electronically available information can advantageously be made use of, e.g., for generating the visual domain textual prompt.

The data indicative of the visual domain may comprise any combination of data types. E.g., the position data may be used to determine the appropriate electronically available information data comprising the local weather forecast for the environment.

The method may comprise a step of receiving data indicative of a class in relation to the environment. The method may further comprise a step of generating an environmental class textual prompt based on the received data indicative of the class in relation to the environment. Extracting (in particular local) features of the environment from the received image data may further be conditioned by the generated environmental class textual prompt.

Generating the environmental class textual prompt may be performed, at least partially by a CLIP encoder.

While conventionally, a CLIP encoder is frozen (and/or unchanged), in particular after a training phase, in contrast and according to the computer-implemented technique presented herein, generating the environmental class textual prompt, and/or the visual domain textual prompt, may at least partly (e.g., after a first processing of the corresponding received data by the CLIP encoder) change over time and/or may be performed by a trainable text adapter (e.g., comprising some multi-layer perceptron, MLP, layers).

By further conditioning the extracting of the (in particular local) features of the environment on the generated environmental class textual prompt, e.g., a classification task, and/or a semantic segmentation task, as visual perception task can be facilitated.

The extracting of features may further be conditioned by the environmental class textual prompt. By the conditioning on the environmental class textual prompt, a classification and/or semantic segmentation as the visual perception task can be facilitated and/or improved.

The step of generating the visual domain textual prompt, and/or the step of generating the environmental class textual prompt may be performed by an adaptive contrastive language-image pretraining (CLIP) encoder. By using an adaptive CLIP encoder for generating the (in particular visual domain and/or environmental class) textual prompt, a generalizability of the computer-implemented technique is enabled and/or improved, in particular in view of a previously untrained (and/or unseen) visual domain and/or a previously untrained (and/or unseen) environmental class.

The conditional feature extracting model may comprise a generative image-to-feature model, which is configured for extracting (in particular local) features of the environment from the received image data of the environment, and a conditioning model, which is configured for encoding the generated visual domain textual prompt for conditioning, and/or controlling, the generative image-to-feature model.

The generative image-to-feature model may be trained (and/or may operate) on a joint vision-language space. The generative image-to-feature model may comprise a vision transformer (ViT, e.g., as described by P. Esser et al. in "Taming Transformers for High-Resolution Image Synthesis", arXiv:201 2.09841 v3 [cs.CV]), a (in particular vector graphics, VG) generative adversarial network (GAN, in particular a VG-GAN, e.g., as described by Yong Zheng Ong et al. in "VG-GAN: Conditional GAN Framework for Graphical Design Generation", 2022 IEEE International Conference on Image Processing (ICIP), Bordeaux, France, 2022, pp. 781-785, DOI: 10.1109/ICIP46576.2022.9897935, which is incorporated herein by reference), a diffusion model for visual perception (VPD, e.g., as described by Wenliang Zhao et al. in "Unleashing Text-to-Image Diffusion Models for Visual Perception, arXiv:2303.02153 v1 [cs.CV]), and/or Stable Diffusion (SD), in particular a SD denoising UNet.

When performing the method, the generative image-to-feature model may be frozen, and/or need not be further adapted, in the sense that weights of the generative image-to-feature model remain unchanged in a fine-tuning phase and/or an inference phase.

The optional environmental class textual prompt may condition (e.g., directly) the image-to-feature model (e.g., by feeding the environmental class textual prompt into encoding and/or decoding layers, and/or into optional middle layers).

The generative image-to-feature model may comprise a diffusion model, in particular SD. The SD network may comprise a U-Net architecture with an encoder and a (in particular skip-connected) decoder.

The diffusion model (also: diffusion probabilistic model, and/or score-based generative model) may comprise a machine learning (ML) model and in particular a generative model, which is configured for image generation, image denoising, inpainting, and/or super-resolution by means of a diffusion process, in particular by using a forward process (e.g., adding, in particular Gaussian, noise to an image), the reverse process (e.g., predicting a, in particular Gaussian, noise within the image and compensating and/or subtracting accordingly), and a sampling procedure.

SD may comprise a latent diffusion model. SD may relate to, or comprise, a neural network (NN) architecture (model) for text-to-image (in particular diffusion) generation. SD aims at learning a diffusion process that generates the probability distribution of a given (image) dataset.

The NN architecture of SD may comprise a convolutional NN (CNN)-based architecture, in particular a U-Net having an encoder and a decoder with skip connections (e.g., between layers of the encoder and the decoder) and/or a (e.g., cross-) attention mechanisms (e.g., within a layer of the encoder and/or the decoder). The NN architecture of SD may further comprise a diffusion process, by which an input image is transformed into a latent space image. By the U-Net, the latent space image may be transformed back into an image in non-latent (and/or image) space.

A denoising UNet may make use of latent diffusion, and/or may be trained in a latent space instead of an original image space. E.g., SD may be specifically trained in the latent space. Alternatively or in addition, generically diffusion models may be trained in the original (e.g., image) space.

Training may comprise two stages with the first stage training an autoencoder to encode and/or transform an image in latent space and subsequently decode and/or reconstruct the image. In the second stage, the diffusion model may be trained in latent space with forward diffusion gradually adding (e.g., Gaussian) noise (in particular according to a Markov chain), and backward de-noising (and/or the UNet) predicting a (e.g., Gaussian) noise.

SD can advantageously produce high-quality (e.g., high-resolution and/or photorealistic) synthetic images based on (in particular visual domain and/or environmental class) textual prompts at low computational cost.

The computer-implemented technique generalizes conventional generative image-to-feature models, in particular SD and/or VPD, by preserving generalizability and/or facilitating adapting to different visual domains, and optionally to different environmental classes, by a corresponding textual prompt.

Compared to generic "diffusion models", SD may train a diffusion model in the latent space (in particular of a pretrained and/or, e.g., subsequently, frozen autoencoder), e.g., instead of in the image or pixel space. By training in the latent space, the computational cost can be reduced, as the latent space is much smaller than the conventional pixel space, e.g., eight (8) times smaller.

There exist alternatives to SD for the generative image-to-feature model (and/or the conditional feature extracting model), e.g., as described by Simian Luo et. al in "Latent Consistency Models: Synthesizing High-Resolution Images with Few-Step Inference", arXiv:2310.04378v1 [cs.CV], which is incorporated herein by reference (and briefly denoted as LCM). In general, the technique for extracting features of an environment from image data is not limited to SD, but can, e.g., be performed using LCM. A main advantage of SD may be viewed in its open-sourced availability.

The conditioning model may comprise a ControlNet. The ControlNet may comprise an encoder and convolution layers with a cross-attention mechanism to the generative image-to-feature model, in particular to the encoder of the SD network.

The generative image-to-feature model, and in particular the SD network, can be conditioned by the visual domain by means of the conditioning model as an extra trainable branch, in particular by using the ControlNet. For the basics of conditioning a SD network using a ControlNet, it is referred to L. Zhang et al. in "Adding Conditional Control to Text-to-Image Diffusion Models" (2023), available at the Computer Vision Foundation and IEEE Xplore, which is incorporated herein by reference.

The SD may comprise a frozen (e.g., after an initial training) UNet, in particular to preserve trained (and/or prior) knowledge during fine-tuning. The ControlNet may comprise a trainable copy of the UNet encoder of the SD for the conditioning by the visual domain textual prompt. The ControlNet may further comprise one or more zero-convolutional layers, through which the visual domain text prompt is fed into the decoder of the SD. A zero-convolutional layer may comprise a (e.g., $1 \times 1$) convolution layer with both weight and bias initialized as zero.

The connection between or combination of the SD network and the ControlNet can provide a particularly computationally efficient conditioning, which saves time and (e.g., graphics processing unit, GPU) memory.

The combination of the SD network and the Control Net with the visual domain textual prompt, and optionally the environmental class textual prompt, can provide a particularly rich generalizable framework for feature extraction and/or visual perception task performance.

Conventional models for perception tasks are trained on a specific dataset, which may comprise limited data and/or scenarios, due to the costly annotation process (e.g., for a segmentation task). By contrast, the technique for extracting features of an environment from image data, e.g., according to the first method aspect, leverages the rich prior knowledge of a pretrained large-scale text-to-image model, which has seen diverse scenarios and is equipped with a joint vision-language latent space. The technique for extracting features of an environment from image data in particular utilizes the language and/or textual prompt control potential and the powerful pretrained knowledge for improving the downstream task (e.g., AD, movement planning for a robot, and/or access control) model's generalization and adaptation capability in different operating domains during the deployment. Alternatively or in addition, only a lightweight decoder needs to trained for the specific task, e.g., semantic segmentation, and/or object detection.

As to a second method aspect, a computer-implemented method for training a conditional feature extracting model for extracting (in particular local) features of an environment from image data conditioned by a visual domain textual prompt is provided. The method comprises a step of receiving a training dataset. The training dataset comprises a visual domain textual prompt indicative of a visual domain of an environment, image data of the environment and (in particular local) features of the environment. The method further comprises a step of training a conditional feature extracting model based on the received training dataset. Training the conditional feature extracting model comprises receiving the image data of the environment as input, the visual domain textual prompt as condition, and the (in particular local) features, as ground truth.

The training dataset may comprise synthetic data (e.g., synthetic image data generated based on the, in particular local, features, and the visual domain textual prompt). Alternatively or in addition, the training dataset may comprise real data, in particular real image data (e.g., with the, in particular local, features and/or the visual domain prompt as annotation).

By training the conditional feature extracting model on a plurality of training datasets, in particular comprising synthetic training datasets, feature extraction, and/or performing a visual perception task, can be rendered adaptive (and/or generalizable) to (in particular previously untrained) visual domains and/or environmental classes, and/or to visual domains and/or environmental classes, for which real training datasets are scarce (e.g., due to real image data being scarce).

SD as an example may be pretrained on large-scale datasets, e.g., LAION-5B. The conditional feature extracting model can be trained on a small labeled real dataset for a specific task, e.g., semantic segmentation. For the AD use case, e.g., the Cityscapes Dataset (comprising 4,000 datasets with high quality annotation and 20,000 datasets with coarse annotation, https://www.cityscapes-dataset.com/) can be used. Alternatively or in addition, synthetic data can also be used, in particular if the annotation (e.g., a segmentation label map) is generated along with the image as well.

The method according to the first method aspect may be used for autonomous driving (AD), planning a movement of a robot, operating a domestic appliance, and/or controlling an access control system.

By the (in particular local) feature extraction and/or by performing the visual perception task based on the image data and the visual domain textual prompt (and optionally the environmental class textual prompt), sufficiently accurate data on the environment may be provided to facilitate AD and/or path planning (and/or trajectory planning) for a (in particular AD) vehicle and/or a (in particular autonomous) robot and/or domestic appliance (e.g., an autonomously moving vacuum cleaner and/or artificial butler).

As to a first device aspect, a computing device for extracting features of an environment from image data is provided. The computing device comprises a visual domain indication reception interface configured for receiving data indicative of a visual domain of an environment. The device further comprises a visual domain textual prompt generating module configured for generating a visual domain textual prompt based on the received data indicative of the visual domain of the environment. The computing device further comprises an environmental image data reception interface configured for receiving image data representative of the environment. The computing device still further comprises a conditional feature extracting model configured for extracting, in particular local, features of the environment from the received image data. The extracting of the (in particular local) features is conditioned by the generated visual domain textual prompt. Optionally, the computing device according to the first device aspect may comprise a visual perception task performing module configured for performing a visual perception task on the environment based on the extracted (in particular local) features. Further optionally, the computing device according to the first device aspect may comprise an environmental class receiving interface configured for receiving data indicative of a class in relation to the environment. The computing device may further comprise an environmental class textual prompt generating module configured for generating a environmental class textual prompt based on the received data indicative of the class in relation to the environment. Extracting (in particular local) features of the environment from the received image data may be further conditioned by the generated environmental class textual prompt.

The computing device according to the first device aspect may be configured to perform any one of the steps, and/or comprise any one of the features, disclosed in the context of the first method aspect.

As to a second device aspect, a computing device for training a conditional feature extracting model for extracting (in particular local) features of an environment from image data conditioned by a visual domain textual prompt is provided. The computing device comprises a training data reception interface configured for receiving a training dataset. The training dataset comprises a visual domain textual prompt indicative of a visual domain of an environment, image data of the environment and (in particular local) features of the environment. The computing device further comprises a training module configured for training a conditional feature extracting model based on the received training dataset. Training the conditional feature extracting model comprises receiving the image data of the environment as input, the visual domain textual prompt as condition, and the (in particular local) features as ground truth.

The computing device according to the second device aspect may be configured to perform any one of the steps, and/or comprise any one of the features, disclosed in the context of the second method aspect.

The computing devices according to the first and the second method aspect may be identical.

As to a system aspect, a system for extracting features of an environment from image data is provided. The system comprises the computing device according to the first device aspect and at least one sensor, and/or at least one interface, for receiving the data indicative of the visual domain and the image data representative of the environment. The data indicative of the visual domain and/or the image data representative of the environment may be received wirelessly (e.g., from a sensor and/or webserver outside of an AD vehicle). Alternatively or in addition, the data indicative of the visual domain and/or the image data representative of the environment may be received via a wired connection (e.g., for a fixedly installed access control system).

As to a further aspect, a computer program product is provided. The computer program product comprises program elements which induce a computing device to carry out the steps of the method for extracting features of an environment from image data, and/or for training a conditional feature extracting model for extracting (in particular local) features of an environment from image data conditioned by a visual domain textual prompt, according to the first and/or second method aspect, when the program elements are loaded into a memory of the computing device.

As to a still further aspect, a computer-readable medium is provided, on which program elements are stored that can be read and executed by a computing device, in order to perform steps of the method for extracting features of an environment from image data, and/or for training a conditional feature extracting model for extracting, in particular local, features of an environment from image data conditioned by a visual domain textual prompt, according to first and/or second method aspect, when the program elements are executed by the computing device.

Brief description of the drawings

Fig. 1 is a flowchart of a method for extracting features of an environment from image data.

Fig. 2 is a flowchart of a method for training a conditional feature extracting model for extracting (in particular local) features of an environment from image data conditioned by a visual domain textual prompt.

Fig. 3 is a schematic illustration of an architecture of a computing device for extracting features of an environment from image data.

Fig. 4 is a schematic illustration of an architecture of a computing device for training a conditional feature extracting model for extracting (in particular local) features of an environment from image data conditioned by a visual domain textual prompt.

Fig. 5 schematically illustrates the conventional SD architecture.

Fig. 6 schematically illustrates the conventional VPD architecture.

Fig. 7 schematically illustrates the conventional Control Net architecture.

Fig. 8 schematically illustrates the technique for extracting features of an environment from image data.

Fig. 9A and 9B exemplarily illustrate data indicative of a visual domain of an environment along with a probability analysis of a predetermined set for generating (in particular automatically) the visual domain textual prompt.

Fig. 10A, 10B and 10C schematically illustrate use cases of the technique for extracting features of an environment from image data, in particular for automated driving, planning of a movement of a robot, and access control, respectively.

Detailed description

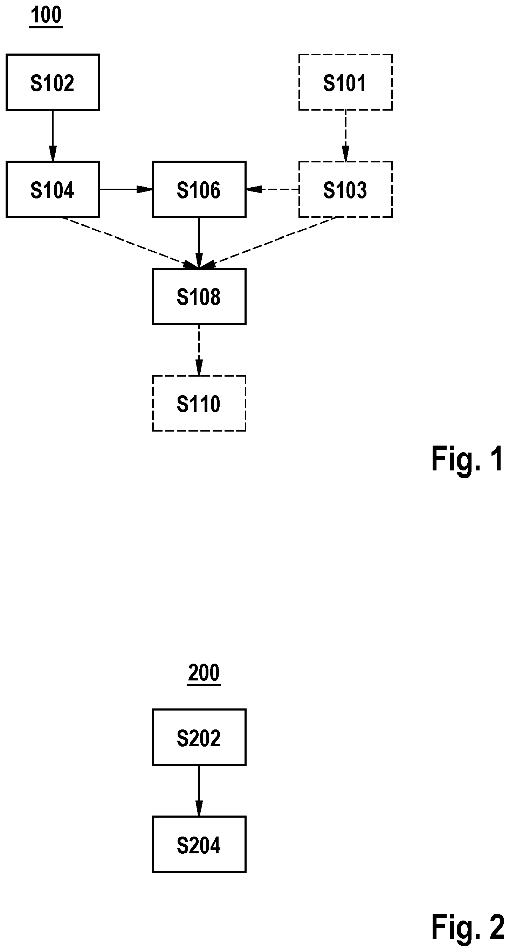

Fig. 1 schematically illustrates a computer-implemented method 100 for extracting features of an environment from image data.

The method 100 comprises a step S102 of receiving data indicative of a visual domain of an environment. The method 100 further comprises a step S104 of generating a visual domain textual prompt based on the received S102 data indicative of the visual domain of the environment. In a step S106, image data representative of the environment are received. The method further comprises a step S108 of extracting (in particular local) features of the environment from the received S106 image data. The extracting S108 of the (in particular local) features is performed by a conditional feature extracting model. The extracting S108 of the (in particular local) features is conditioned by the generated S104 visual domain textual prompt.

Optionally, in a step S110 a visual perception task on the environment is performed based on the extracted S108 (in particular local) features.

Further optionally, the method 100 comprises a step S101 of receiving data indicative of an environmental class in relation to the environment and a step S103 of generating an environmental class textual prompt based on the received S101 data indicative of the class in relation to the environment. Extracting S108 (in particular local) features of the environment from the received S106 image data may be further conditioned by the generated S103 environmental class textual prompt.

Fig. 2 schematically illustrates a computer-implemented method 200 for training a conditional feature extracting model for extracting (in particular local) features of an environment from image data conditioned by a visual domain textual prompt.

The method 200 comprises a step S202 of receiving a training dataset. The training dataset comprises a visual domain textual prompt indicative of a visual domain of an environment, image data of the environment and (in particular local) features of the environment. The method 200 further comprises a step S204 of training a conditional feature extracting model based on the received S202 training dataset. Training S204 the conditional feature extracting model comprises receiving the image data of the environment as input, the visual domain textual prompt as condition, and the (in particular local) features as ground truth.

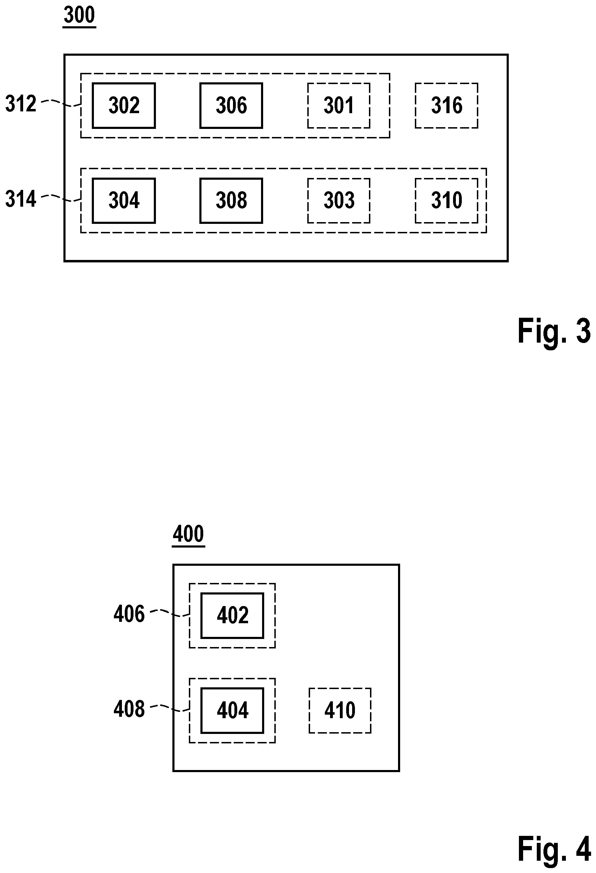

Fig. 3 schematically illustrates an architecture of a computing device 300 for extracting features of an environment from image data.

The computing device 300 comprises a visual domain indication reception interface 302 configured for receiving data indicative of a visual domain of an environment. The computing device 300 further comprises a visual domain textual prompt generating module 304 configured for generating a visual domain textual prompt based on the received data indicative of the visual domain of the environment. The computing device 300 further comprises an environmental image data reception interface 306 configured for receiving image data representative of the environment. The computing device 300 still further comprises a conditional feature extracting model 308 configured for extracting (in particular local) features of the environment from the received image data. The extracting of the (in particular local) features is conditioned by the generated visual domain textual prompt.

Optionally, the computing device 300 may comprise a visual perception task performing module 310 configured for performing a visual perception task on the environment based on the extracted (in particular local) features.

Further optionally, the computing device 300 may comprise an environmental class receiving interface 301 configured for receiving data indicative of a class in relation to the environment. The computing device may further comprise an environmental class textual prompt generating module 303 configured for generating an environmental class textual prompt based on the received data indicative of the class in relation to the environment. Extracting (in particular local) features of the environment from the received image data may be further conditioned by the generated environmental class textual prompt.

Any one of the visual domain indication reception interface 302, the optional environmental class receiving interface 301, and the environmental image data reception interface 306 may be embodied by an input-output interface 312. Alternatively or in addition, any one of the visual domain textual prompt generating module 304, the optional environmental class textual prompt generating module 303, the conditional feature extracting model 308, and the optional visual perception task performing module 310 may be embodied by a processing unit 314. Further alternatively or in addition, the computing device 300 may comprise at least one memory 316.

The computing device 300 may be configured to perform any one of the steps, and/or comprise any one of the features, disclosed in the context of the method 100.

Fig. 4 schematically illustrates an architecture of a computing device 400 for training a conditional feature extracting model for extracting (in particular local) features of an environment from image data conditioned by a visual domain textual prompt.

The computing device 400 comprises a training data reception interface 402 configured for receiving a training dataset. The training dataset comprises a visual domain textual prompt indicative of a visual domain of an environment, image data of the environment and, in particular local, features of the environment. The computing device 400 further comprises a training module 404 configured for training a conditional feature extracting model based on the received training dataset. Training the conditional feature extracting model comprises receiving the image data of the environment as input, the visual domain textual prompt as condition, and the (in particular local) features as ground truth.

The training data reception interface 402 may be embodied by an input-output interface 406. Alternatively or in addition, the training module 404 may be embodied by a processing unit. Further alternatively or in addition, the computing device 400 may comprise at least one memory 410.

The computing device 400 may be configured to perform any one of the steps, and/or comprise any one of the features, disclosed in the context of the method 200.

Any one of the processing units 314; 408 may comprise a central processing unit (CPU), and/or a graphics processing unit (GPU).

The computing device 300 and the computing device 400 may be identical.

The techniques for extracting features of an environment from image data and for training a conditional feature extracting model for extracting (in particular local) features of the environment from the image data provide a novel way of utilizing a large-scale text-to-image model (in particular the conditional feature extracting model) for domain adaptive visual perception tasks, e.g., semantic segmentation and/or object detection.

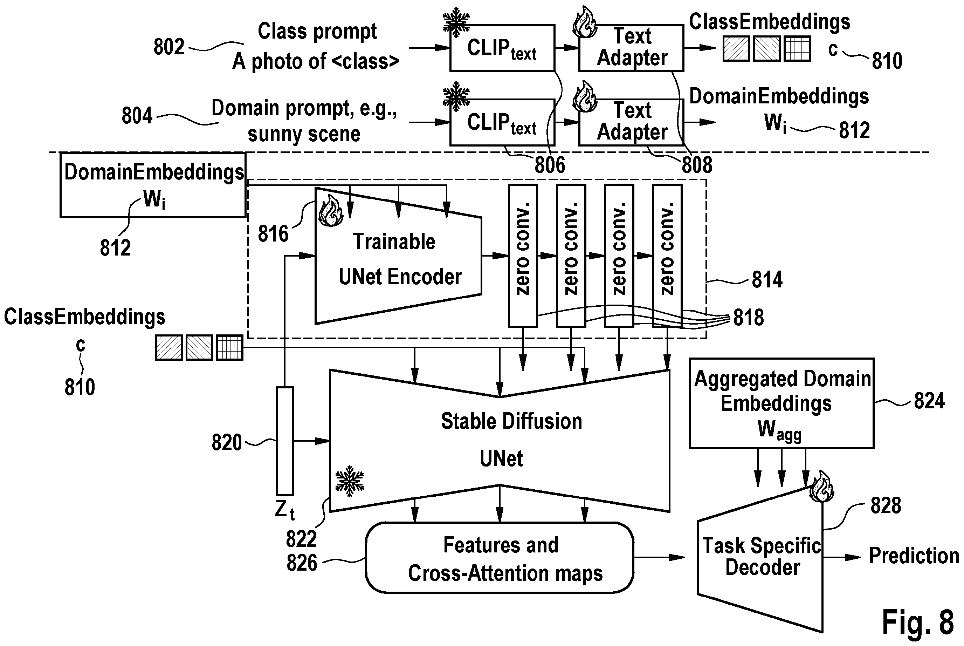

Prior work on VPD making use of finetuned SD and a trained task-specific decoder has demonstrated promising results when testing on the same trained domain. The techniques for extracting features of an environment from image data and for training a conditional feature extracting model for extracting (in particular local) features of the environment from the image data push one step further and aim to employ the model on various unseen domains, taking advantage of the generalizable representation of the conditional feature extracting model (and/or large-scale pretrained model) and the joint vision-language embedding space. The (in particular visual domain and/or environmental class) textual prompts are leveraged, e.g., as the domain indicator to adapt the model to different domains. The conditional feature extracting model (as a text-to-image diffusion model) can (e.g., naturally) be conditioned on the text. Additionally, a task-specific decoder can be conditioned on the domain embeddings as well to further enhance the conditioning, as schematically illustrated in Fig. 8.

E.g., SD not only captures rich semantic information, but may also has seen many visual domains, e.g., different weather and/or lightning conditions, making its representation more generalizable. Differently from VPD, which potentially overfits on the training set, the generalizable representation (e.g., of SD) can be leveraged according to the techniques for extracting features of an environment from image data and for training a conditional feature extracting model for extracting (in particular local) features of the environment from the image data and employed for domain adaptation and/or generalization tasks. E.g., SD may be finetuned on the training set while preserving its ability to be adapted to different test sets. For instance, the conditional feature extracting model can be finetuned on sunny images, and the conditional feature extracting model will have reasonable performance not only on the trained domain (e.g., sunny condition), but also on unseen data, e.g., rainy and/or foggy image data.

It is note that the conventional VPD finetunes the whole denoising model directly, which might destroy the prior knowledge, as illustrated in Fig. 6.

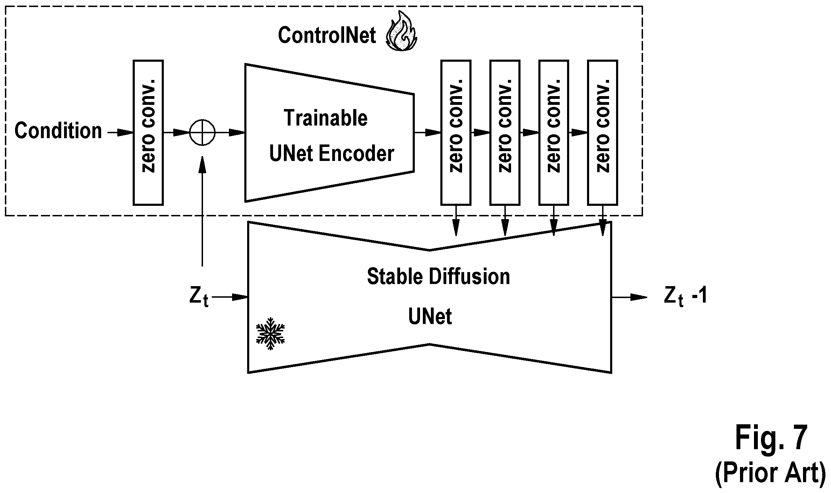

As an alternative, the fine-tuning manner of the ControlNet may be adopted, which adds a trainable branch while freezing the original SD to maximally preserve the prior knowledge, as schematically illustrated in Fig. 7. Additionally, the techniques for extracting features of an environment from image data and for training a conditional feature extracting model for extracting (in particular local) features of the environment from the image data exploit the usage of (e.g., visual domain and/or environmental class) textual prompts, in particular as a domain indicator, to conveniently adjust the a conditional feature extracting model to different domains, leveraging the joint visual and text embedding space of SD.

The techniques for extracting features of an environment from image data and for training a conditional feature extracting model for extracting (in particular local) features of the environment from the image data are more robust and generalizable to various (in particular unseen) visual domains, e.g., different weather and/or lightning condition, and/or new countries. Conventionally, the network tends to overfit to the training set (e.g., sunny images), and cannot generalize to unseen domains (e.g., rainy and/or foggy scenes). Since the environment in the real-world is diverse and changing, and the conditional feature extracting model can only be trained on limited data, it is important to design a robust conditional feature extracting model that can cope with unseen situations.

This is critical for real-life applications such as AD (in particular autonomous driving), and/or robots. For instance, a person walking on the road at night could be ignored by an autonomous car and lead to an accident, if the conditional feature extracting model trained on sunny images cannot generalize to night scenes.

By contrast, the technique for extracting features of an environment from image data can adapt itself in different domains flexibly with the aid of the (e.g., visual domain and/or environmental class) textual prompt. Alternatively or in addition, the conditional feature extracting model is built on top of a large-scale pretrained model (e.g., SD), which can transfer rich prior knowledge and make the training converge faster.

The techniques for extracting features of an environment from image data and for training a conditional feature extracting model for extracting (in particular local) features of the environment from the image data can be used for analyzing data obtained from a sensor. The sensor may determine measurements of the environment in the form of sensor signals, which may be given by (in particular digital) image data, comprising e.g. video, radar, LiDAR, ultrasonic, motion, and/or thermal images.

The techniques for extracting features of an environment from image data and for training a conditional feature extracting model for extracting (in particular local) features of the environment from the image data can be used for classifying the sensor data, detecting the presence of objects in the sensor data, and/or performing a semantic segmentation on the sensor data, e.g., regarding traffic signs, road surfaces, pedestrians vehicles, and/or object classes that could show in the semantic segmentation task, such as trees and/or the sky.

Alternatively or in addition, the techniques for extracting features of an environment from image data and for training a conditional feature extracting model for extracting (in particular local) features of the environment from the image data can be used for determining a continuous value or multiple continuous values (e.g., perform a regression analysis), e.g., regarding a distance, a velocity, an acceleration, and/or tracking an item, e.g., an object, in the data. The determining of the one or more continuous values may be carried out based on low-level features (e.g. edges and/or pixel attributes for images).

Alternatively or in addition, the techniques for extracting features of an environment from image data and for training a conditional feature extracting model for extracting (in particular local) features of the environment from the image data can be used to detect anomalies in a (in particular downstream) technical system (e.g., an AD vehicle, a robot, a domestic appliance, and/or an access control system). It can do so by analyzing data (e.g. scalar time series, also denoted as measure and control), especially from a sensor and then operating the technical system accordingly. Alternatively or in addition, anomalies may be detected and then the technical system may be operated in a fail-safe mode.

Method/Data for Training: The techniques for extracting features of an environment from image data and for training a conditional feature extracting model for extracting (in particular local) features of the environment from the image data may be considered as the upstream part in a machine learning (ML) tool chain. After being trained, the conditional feature extracting model of ML system can be put to downstream use, e.g., for AD, planning of movements of a robot, operating of a domestic appliance, and/or or controlling an access control system.

The techniques for extracting features of an environment from image data and for training a conditional feature extracting model for extracting (in particular local) features of the environment from the image data according to an embodiment employs SD not only on the trained domain, but also preserves its generalization ability so that it can be used in unseen domains as well. Thanks to the joint vision-language embedding space of SD, the conditional feature extracting model can adapt (e.g., to a different domain) using the (in particular visual domain and/or environmental class) textual prompt.

As already mentioned above, instead of operating in the image space, SD operates in the latent space of an autoencoder, as schematically illustrated in Fig. 5. Firstly, the encoder $\varepsilon$ maps the given image $x$ into a spatial latent code $z = \varepsilon(x)$. Then $z$ is mapped back to the image space by the decoder $D$.

The autoencoder is trained to reconstruct the given image, i.e., $D(\varepsilon(x)) \approx x$.

In the second stage, a diffusion model is trained in the latent space Z. The diffusion model comprises a forward diffusion process and a backward denoising process. The forward pass comprises a Markov chain to gradually add Gaussian noise to the clean data. Formally, it can be written as, e.g.,

$$q(z_t|z_{t-1}) = N(z_t; \sqrt{1 - \beta_t}z_{t-1}, \beta_t I)$$ , where $\{\beta_t\}_{t=0}^{T}$ are fixed variance schedule.

The noisy latent can be computed in a closed form, e.g.,

$$z_t = \sqrt{\alpha_t}z_0 + \sqrt{\sqrt{1 - \alpha_t}}\epsilon, \ \epsilon \sim N(0,I), \qquad (1)$$

where $z_0 = \varepsilon(x)$, and $\alpha_t := \prod_{s=1}^{t}(1 - \beta_s)$. The reverse denoising process can be parametrized by another Gaussian distribution $p_\theta(z_{t-1}|z_t) := N(z_{t-1}; \mu_\theta(z_t, t), \sigma_\theta(z_t, t))$. Essentially, $\mu_\theta(z_t, t)$ can be expressed as a linear combination of $z_t$ and the predicted noise $\varepsilon_\theta(z_t, t)$, which is modelled by a UNet. The parameters of the UNet may be learned by minimizing the L2 norm of the noise prediction at a sampled timestep t:

$$\mathcal{L}_{noise} = \mathrm{E}_{z\sim\mathcal{E}(x),\epsilon\sim N(0,I),t} \left[\|\epsilon - \epsilon_\theta(z_t, t)\|\right]^2 . (2)$$

A more mathematical derivation is provided by Jonathan Ho et al. in "Denoising Diffusion Probabilistic Models", arXiv:2006.11239v2 [cs.LG], which incorporated herein by reference. The conditional information, e.g., (in particular visual domain and/or environmental class) text prompt, is inserted via the cross-attention mechanism indicated a "CLIPtext" in the lower part of Fig. 5.

At inference time, the latent representation $z_T$ may be randomly sampled from the Gaussian distribution, and then the trained denoising UNet may be employed sequentially, to obtain the denoised latent $z_{t-1}$ given $z_t$ from to $t = T$ to $t = 1$. The final synthesized image may be obtained by feeding the clean latent $z_0$ through the decoder D.

VPD, as schematically indicated in Fig. 6 by the flame symbol, finetunes the pretrained SD UNet for downstream visual perception tasks, e.g., semantic segmentation and/or depth estimation. As schematically illustrated in Fig. 6, VPD extracts features and cross-attention maps from the UNet and feeds them to the task specific decoder. For a semantic segmentation task, the class embedding can be extracted from a frozen (as indicated by the snowflake symbol) CLIP text encoder and adapted by a trainable text adapter (as indicated by the flame symbol, e.g., a few MLP layers), which can then be used as the (e.g., domain and/or class) textual prompt (also: text condition) to the SD UNet. Nevertheless, VPD only focuses on the in-domain ability, e.g., the test set is assumed to share the same distribution as the training set, and the large model tends to overfit to the specific trained domain.

By contrast, the techniques for extracting features of an environment from image data and for training a conditional feature extracting model for extracting (in particular local) features of the environment from the image data take the conditional feature extracting model's generalization ability into consideration and design a more robust conditional feature extracting model also for unseen domains and/or unseen environments.

The ControlNet enhances the SD with additional input conditions, e.g., a label map. As schematically illustrated in Fig. 7, the ControlNet clones a trainable copy of the UNet encoder, and the original SD is frozen during the fine-tuning (as indicated by the flame and snowflake symbols, respectively). The input condition is fed as the input of the ControlNet, and after the zero convolution layers and trainable encoder, the features are inserted back to the decoder of SD, where the zero convolution layers are essentially $1\times1$ convolution layers with both weight and bias initialized as zeros.

The training objective of the ControlNet plus SD UNet architecture is adopted from eq. (2) by inserting the condition $y$:

$$\mathcal{L}_{noise} = \mathrm{E}_{z\sim\mathcal{E}(x),\epsilon\sim N(0,I),t}\left[\|\epsilon - \epsilon_\theta(z_t, t, y)\|\right]^2 \quad . (3)$$

The techniques for extracting features of an environment from image data and for training a conditional feature extracting model for extracting (in particular local) features of the environment from the image data exploit the conditional feature extracting model, in particular as a large-scale text-to-image generative model (e.g., comprising SD) for visual perception tasks (e.g., semantic segmentation and/or object detection), while preserving the conditional feature extracting model's generalization ability in various (in particular unseen) domains and/or environments. The key idea is to take advantage of the joint vision-language latent space of large-scale models and design the conditional feature extracting model to adapt itself flexibly based on the (in particular visual domain and/or environmental class) textual prompt (also: text condition) indicating the visual domain and/or the environmental class.

As indicated at reference signs 802 and 804, given data indicative a class in relation to an environment and/or indicative of a visual domain of the environment (e.g, comprising an image), the operating visual domain and/or environmental class that it belongs to is determined. This can be done either manually or automatically. For the manual case, the operating "visual domain" and/or environmental class can be specified directly by human (e.g., via a UI, in particular a GUI).

Alternatively or in addition, some datasets such as the Adverse Conditions Dataset (ACDC, available at https://acdc.vision.ee.ethz.ch/), already comprise the meta-information of weather conditions (e.g., rain, fog, snow, and/or night). In downstream (and/or real) applications, such as AD (in particular autonomous driving), a human can provide such information to the model dynamically.

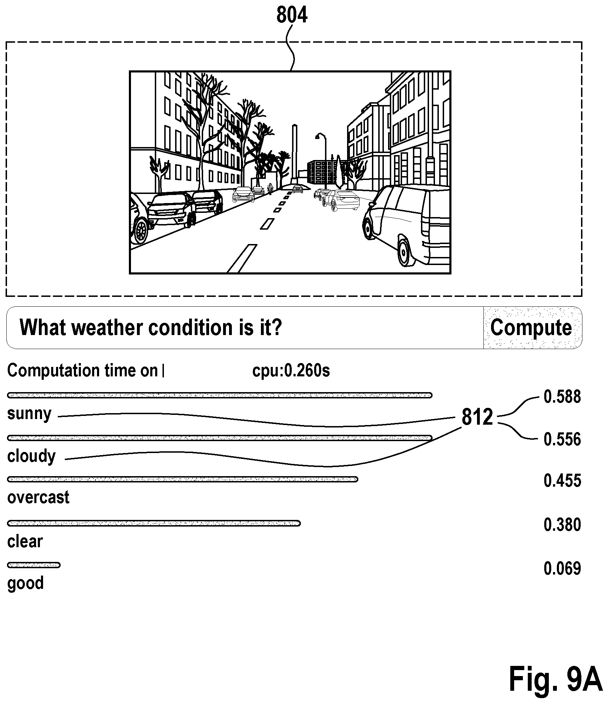

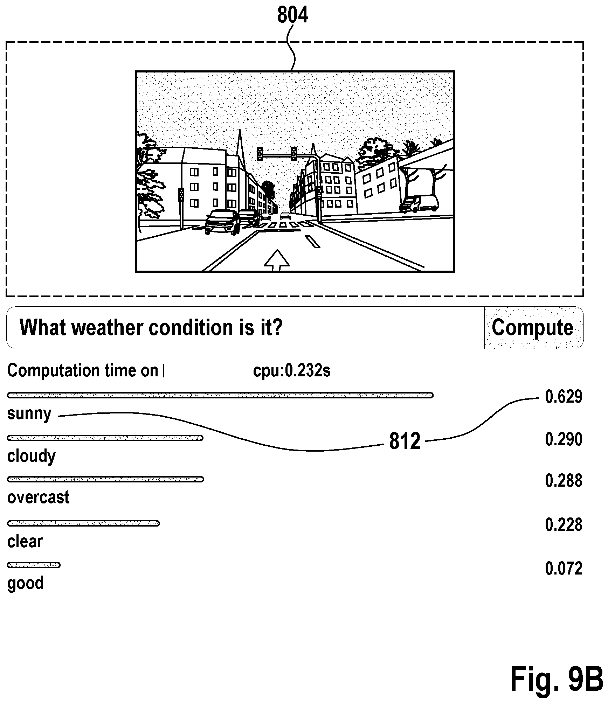

For the automatic identification of the operating visual domain and/or environmental class, a pretrained Visual Question Answering (VQA) model, e.g., mPlug, may be leveraged (e.g., as described by Chenliang Li et al., "mPLUG: Effective and Efficient Vision-Language Learning by Cross-modal Skip-connections", arXiv:2205.12005v2 [cs.CL] and incorporated herein by reference). Examples are shown in Fig. 9A and 9B, where a model asks "What weather condition is it?" based on an image 804 as the data indicative of the visual domain. The model returns top answers 812 with likelihood. E.g., in Fig. 9A both "sunny" and "cloudy" are the two most likely answers with nearly identical probability, whereas in Fig. 9B, "cloudy" is the answer with the by far largest probability.

Similarly, questions may be asked, e.g., with respect to lightning conditions, and/or countries. The top-1 answer can be taken as the (e.g., intermediary) visual domain prompt input and/or data indicative of the visual domain (e.g., for the example in Fig. 9B). Alternatively or in addition, as the "visual domain" concept may be ambiguous (e.g., with nearly equal probabilities, as exemplified in Fig. 9A), the top-K answers may be taken with probability (e.g., with K=2). Having the (e.g., intermediary) visual domain prompt input and/or data indicative of the visual domain, a frozen CLIP encoder 806 and a (in particular light-weight) trainable text adapter 808 may be employed to obtain the visual domain textual prompt (also denoted as domain embeddings $W_i$) at reference sign 812, e.g.:

$$W_i = \psi_{adp}(CLIP_{text}(y_i)), i = 1,\ldots,K \text{ (4)}$$

where $y_i$ represents the visual domain prompt, e.g., "sunny scenes", and $CLIP_{text}$ and $\psi_{adp}$ are CLIP text encoder and the text adapter, respectively.

As schematically illustrated in Fig. 8, the conditional feature extracting model may be further conditioned on an environmental class textual prompt (also denoted as class embedding $c$) at reference sign 810, which may be obtained from data indicative of the class in relation to the environment 802 using a further frozen CLIP encoder 806 and a further a (in particular light-weight) trainable text adapter 808.

The visual domain textual prompt (and/or domain embeddings) 812 may be used to condition the conditional feature extracting model comprising the exemplary frozen SD UNet 822 and the ControlNet 814 having a trainable copy 816 of the UNet encoder (e.g., of the SD UNet 822) followed by zero convolutions 818. As an alternative option of direct fine-tuning the whole UNet as in conventional VPD, in the example of Fig. 8, the fine-tuning manner of ControlNet 814, which keeps the original UNet 822 frozen and adds the trainable copy 816 of the UNet encoder, which is initialized using the pretrained weights of the SD UNet encoder. In this way, the prior knowledge of SD is fully preserved.

Both the frozen SD UNet 822 and the trainable copy 816 of the UNet encoder are configured to receive the latent representation 820.

Naturally, the optional environmental class textual prompt 810 (also: text condition) may be used in the same way as in conventional SD in Fig. 8, which can be utilized via cross-attention. The visual domain textual prompt 812 (also: domain embeddings) in the exemplary embodiment of Fig. 8 is fed into the trainable UNet encoder 816 of the ControlNet 814 using a cross-attention mechanism.

The features and cross-attention maps can be extracted analogously to VPD, as schematically illustrated at reference sign 826. Alternatively or in addition, instead of extracting from the single clean latent $z_0$, the features may be extracted from multiple timesteps. Based on eq. (1), noisy latents may be obtained at different timesteps directly. The feature extraction step may, e.g., be formulated as:

$$f_{i,t} = SD(W_i, z_t, c), \ f_i = Agg(f_{i,t}), \ f = \Sigma_i f_i * p_i, \ (5)$$

where SD represents Stable Diffusion, *and* c is the class embeddings (and/or environmental class textual prompt) 810 for the task, e.g., semantic segmentation. *Agg* indicates the aggregation operation, e.g., a simple mean average over features $f_{i,t}$ at different timesteps. $p_i$ is the probability of the current domain embedding $W_i$ (and/or visual domain textual prompt) 812.

Further, the visual domain textual prompt (and/or domain embeddings) 812 may be used in the task specific decoder 828. The domain embedding (visual domain textual prompt) 812 may be firstly aggregated as indicated at reference sign 824,

$$W_{agg} = Agg(W_i, p_i), \ (6)$$

where *Agg* is the aggregation operation, e.g., a simple probabilistic average and/or learnable mapping. As mentioned in previous works, e.g., by Seonguk et al. in "Learning to Optimize Domain Specific Normalization for Domain Generalization", DOI: 10.1007/978-3-030-58542-6_5, which is incorporated herein by reference, normalization statistics can have important impact in a visual domain (and/or environmental class) generalization ability. Therefore, according to an embodiment, the domain embedding (and/or visual domain textual prompt) 812 is used to map these embeddings to the normalization parameters, e.g.,:

$$f_{adp} = \frac{f - \mu_{fdec}}{\gamma_{fdec}} \gamma(W_{agg}) + \mu(W_{agg}), \ (7)$$

where $\mu_{fdec}$ and $\gamma_{fdec}$ are the mean and standard deviation of features within the decoder $f_{dec}$ (e.g., the task-specific decoder 828). $\mu(W_{agg})$ and $\gamma(W_{agg})$ are the learned affine transformation parameters, conditioned on the aggregated domain embedding $W_{agg}$. Finally, the task specific decoder 828 will output the predictions on the specific task (e.g., of the semantic segmentation and/or object classification).

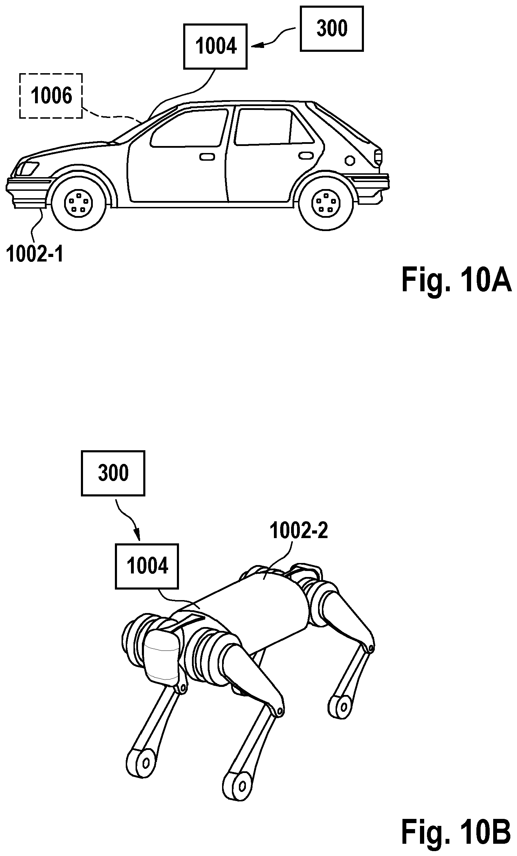

Fig. 10A schematically illustrates an example of a first use case, in which the AD vehicle's 1002-1 controller 1004 receives the result of the feature extraction (e.g., according to the step S108) and/or of the visual perception task (e.g., according to the step S110) for performing the AD functionality. Optionally, the received result may also displayed to a driver and/or passenger, e.g., on a display 1006 of a center console.

Fig. 10B schematically illustrates an example of a second use case, in which a robot's 1002-2 controller 1004 receives the result of the feature extraction (e.g., according to the step S108) and/or of the visual perception task (e.g., according to the step S110) for planning the motion of the robot 1002.

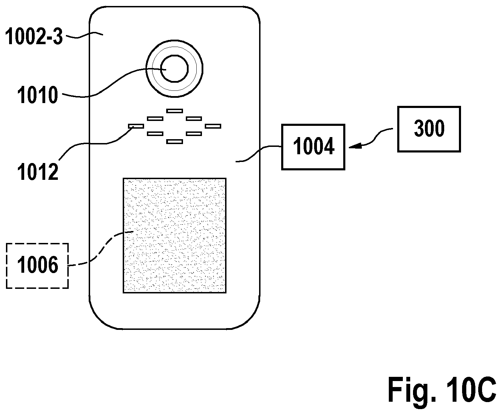

Fig. 10C schematically illustrates an example of a third use case, in which an access control system 1002-3 has a first sensor 1010 for acquiring the image data representative of the environment, optionally a second sensor 1012 for acquiring audio data representative of the environment, a controller 1004 and optionally a display 1006 (in particular for a person requesting access). The controller 1004 receives the result of the feature extraction (e.g., according to the step S108) and/or of the visual perception task (e.g., according to the step S110) for determining is access is granted or not.

Cited Prior Art

[1] R. Rombach et al., "High-Resolution Image Synthesis with Latent Diffusion Models", arXiv:2112.10752v2 [cs.CV]
[2] Wenliang Zhao et al., "Unleashing Text-to-Image Diffusion Models for Visual Perception, arXiv:2303.02153 v1 [cs.CV])
[3] P. Esser et al., "Taming Transformers for High-Resolution Image Synthesis", arXiv:2012.09841v3 [cs.CV]
[4] Yong Zheng Ong et al., "VG-GAN: Conditional GAN Framework for Graphical Design Generation", 2022 IEEE International Conference on Image Processing (ICIP), Bordeaux, France, 2022, pp. 781-785, doi: 10.1109/ICIP46576.2022.9897935
[5] Dan Zhang et al., "Anomaly-Aware Semantic Segmentation via Style-Aligned OoD Augmentation", arXiv:2308.09965v1 [cs.CV]
[6] Simian Luo et al., "Latent Consistency Models: Synthesizing High-Resolution Images with Few-Step Inference", arXiv:2310.04378v1 [cs.CV]
[7] https://www.cityscapes-dataset.com/
[8] Jonathan Ho et al., "Denoising Diffusion Probabilistic Models", arXiv:2006.11239v2 [cs.LG]
[9] https://acdc.vision.ee.ethz.ch/
[10] Chenliang Li et al., "mPLUG: Effective and Efficient Vision-Language Learning by Cross-modal Skip-connections", arXiv:2205.12005v2 [cs.CL]
[11] Seonguk Seo et al., "Learning to Optimized Domain Specific Normalization for Domain Generalization" (2020) 10.1007/978-3-030-58542-6_5.

**Claims**

1. Computer-implemented method (100) for extracting features of an environment from image data, comprising the method steps of:

   - Receiving (S102) data indicative of a visual domain of an environment;
   - Generating (S104) a visual domain textual prompt based on the received (S102) data indicative of the visual domain of the environment;
   - Receiving (S106) image data representative of the environment; and
   - Extracting (S108), in particular local, features of the environment from the received (S106) image data, wherein the extracting (S108) of the, in particular local, features is performed by a conditional feature extracting model, and wherein the extracting (S108) of the, in particular local, features is conditioned by the generated (S104) visual domain textual prompt.

2. Method (100) according to claim 1, further comprising the method step of:

   - Performing (S110) a visual perception task on the received image data based on the extracted (S108), in particular local, features.

3. Method (100) according to the directly preceding claim, wherein the visual perception task comprises at least one of:

   - A depth estimation;
   - An object detection;
   - A classification; and
   - A semantic segmentation.

4. Method (100) according to claim 2 or 3, wherein performing (S110) the visual perception task on the image data is conditioned on the generated (S104) visual domain textual prompt.

5. Method (100) according to any of the preceding claims, wherein the received (S102) data indicative of the visual domain comprise at least one of:

   - Environmental sensor data;
   - Position data determined by means of a positioning system, in particular by a satellite navigation system;

- Manually input data; and
- Electronically available information data.

6. Method (100) according to any of the preceding claims, further comprising the steps of:

- Receiving (S101) data indicative of a class in relation to the environment; and
- Generating (S103) an environmental class textual prompt based on the received (S101) data indicative of the class in relation to the environment,

wherein extracting (S108), in particular local, features of the environment from the received (S106) image data is further conditioned by the generated (S103) environmental class textual prompt.

7. Method (100) according to the directly preceding claim, wherein the extracting (S108) of features is further conditioned by the environmental class textual prompt.

8. Method (100) according to any of the preceding claims, wherein the step of generating (S104) the visual domain textual prompt, and/or the step of generating (S103) the environmental class textual prompt is performed by an adaptive contrastive language-image pretraining, CLIP, encoder.

9. Method (100) according to any of the preceding claims, wherein the conditional feature extracting model comprises a generative image-to-feature model, which is configured for extracting, in particular local, features of the environment from the received (S106) image data of the environment, and a conditioning model, which is configured for encoding the generated (S104) visual domain textual prompt for conditioning, and/or controlling, the generative image-to-feature model.

10. Method (100) according to the directly preceding claim, wherein the generative image-to-feature model comprises a diffusion model, in particular Stable Diffusion, SD, wherein the SD network comprises a U-Net architecture with an encoder and a, in particular skip-connected, decoder.

11. Method (100) according to claim 9 or 10, wherein the conditioning model comprises a ControlNet, wherein the ControlNet comprises an encoder and convolution layers with a cross-attention mechanism to the generative image-to-feature model, in particular to the encoder of the SD network.

12. Computer-implemented method (200) for training a conditional feature extracting model for extracting, in particular local, features of an environment from image data conditioned by a visual domain textual prompt, comprising the method steps of:

- Receiving (S202) a training dataset, wherein the training dataset comprises a visual domain textual prompt indicative of a visual domain of an environment, image data of the environment and, in particular local, features of the environment; and
- Training (S204) a conditional feature extracting model based on the received (S202) training dataset, wherein training (S204) the conditional feature extracting model comprises receiving the image data of the environment as input, the visual domain textual prompt as condition, and the, in particular local, features, as ground truth.

13. Use of the method (100; 200) according to any one of claims 1 to 11 or 12 for at least one of:

- Autonomous driving, AD;
- Planning a movement of a robot;
- Operating a domestic appliance; and
- Controlling an access control system.

14. Computing device (300) for extracting features of an environment from image data, comprising:

- a visual domain indication reception interface (302) configured for receiving data indicative of a visual domain of an environment;
- a visual domain textual prompt generating module (304) configured for generating a visual domain textual prompt based on the received data indicative of the visual domain of the environment;
- an environmental image data reception interface (306) configured for receiving image data representative of the environment; and

- a conditional feature extracting model (308) configured for extracting, in particular local, features of the environment from the received image data, wherein the extracting of the, in particular local, features is conditioned by the generated visual domain textual prompt.

15. Computing device (400) for training a conditional feature extracting model for extracting, in particular local, features of an environment from image data conditioned by a visual domain textual prompt, comprising:

- a training data reception interface (402) configured for receiving a training dataset, wherein the training dataset comprises a visual domain textual prompt indicative of a visual domain of an environment, image data of the environment and, in particular local, features of the environment; and
- a training module (404) configured for training a conditional feature extracting model based on the received training dataset, wherein training the conditional feature extracting model comprises receiving the image data of the environment as input, the visual domain textual prompt as condition, and the, in particular local, features as ground truth.

**Amended claims in accordance with Rule 137(2) EPC.**

1. Computer-implemented method (100) for extracting features of an environment from image data, comprising the method steps of:

- Receiving (S102) data indicative of a visual domain of an environment, wherein the received data indicative of the visual domain comprises at least one of:
- Environmental sensor data;
- Position data determined by means of a positioning system, in particular by a satellite navigation system;
- Manually input data; and
- Electronically available information data;
- Generating (S104) a visual domain textual prompt based on the received (S102) data indicative of the visual domain of the environment;
- Receiving (S106) image data representative of the environment; and
- Extracting (S108), in particular local, features of the environment from the received (S106) image data, wherein the extracting (S108) of the, in particular local, features is performed by a conditional feature extracting model, and wherein the extracting (S108) of the, in particular local, features is conditioned by the generated (S104) visual domain textual prompt.

2. Method (100) according to claim 1, further comprising the method step of:

- Performing (S110) a visual perception task on the received image data based on the extracted (S108), in particular local, features.

3. Method (100) according to the directly preceding claim, wherein the visual perception task comprises at least one of:

- A depth estimation;
- An object detection;
- A classification; and
- A semantic segmentation.

4. Method (100) according to claim 2 or 3, wherein performing (S110) the visual perception task on the image data is conditioned on the generated (S104) visual domain textual prompt.

5. Method (100) according to any of the preceding claims, further comprising the steps of:

- Receiving (S101) data indicative of a class in relation to the environment; and
- Generating (S103) an environmental class textual prompt based on the received (S101) data indicative of the class in relation to the environment,

wherein extracting (S108), in particular local, features of the environment from the received (S106) image data is further conditioned by the generated (S103) environmental class textual prompt.

6. Method (100) according to the directly preceding claim, wherein the extracting (S108) of features is further conditioned by the environmental class textual prompt.

7. Method (100) according to any of the preceding claims, wherein the step of generating (S104) the visual domain textual prompt, and/or the step of generating (S103) the environmental class textual prompt is performed by an adaptive contrastive language-image pretraining, CLIP, encoder.

8. Method (100) according to any of the preceding claims, wherein the conditional feature extracting model comprises a generative image-to-feature model, which is configured for extracting, in particular local, features of the environment from the received (S106) image data of the environment, and a conditioning model, which is configured for encoding the generated (S104) visual domain textual prompt for conditioning, and/or controlling, the generative image-to-feature model.

9. Method (100) according to the directly preceding claim, wherein the generative image-to-feature model comprises a diffusion model, in particular Stable Diffusion, SD, wherein the SD network comprises a U-Net architecture with an encoder and a, in particular skip-connected, decoder.

10. Method (100) according to claim 8 or 9, wherein the conditioning model comprises a ControlNet, wherein the ControlNet comprises an encoder and convolution layers with a cross-attention mechanism to the generative image-to-feature model, in particular to the encoder of the SD network.

11. Computer-implemented method (200) for training a conditional feature extracting model for extracting, in particular local, features of an environment from image data conditioned by a visual domain textual prompt, comprising the method steps of:

   - Receiving (S202) a training dataset, wherein the training dataset comprises a visual domain textual prompt indicative of a visual domain of an environment, image data of the environment and, in particular local, features of the environment; and
   - Training (S204) a conditional feature extracting model based on the received (S202) training dataset, wherein training (S204) the conditional feature extracting model comprises receiving the image data of the environment as input, the visual domain textual prompt as condition, and the, in particular local, features, as ground truth.

12. Use of the method (100; 200) according to any one of claims 1 to 10 or 11 for at least one of:

   - Autonomous driving, AD;
   - Planning a movement of a robot;
   - Operating a domestic appliance; and
   - Controlling an access control system.

13. Computing device (300) for extracting features of an environment from image data, comprising:

   - a visual domain indication reception interface (302) configured for receiving data indicative of a visual domain of an environment;
   - a visual domain textual prompt generating module (304) configured for generating a visual domain textual prompt based on the received data indicative of the visual domain of the environment;
   - an environmental image data reception interface (306) configured for receiving image data representative of the environment; and
   - a conditional feature extracting model (308) configured for extracting, in particular local, features of the environment from the received image data, wherein the extracting of the, in particular local, features is conditioned by the generated visual domain textual prompt.

14. Computing device (400) for training a conditional feature extracting model for extracting, in particular local, features of an environment from image data conditioned by a visual domain textual prompt, comprising:

   - a training data reception interface (402) configured for receiving a training dataset, wherein the training dataset comprises a visual domain textual prompt indicative of a visual domain of an environment, image data of the environment and, in particular local, features of the environment; and
   - a training module (404) configured for training a conditional feature extracting model based on the received training dataset, wherein training the conditional feature extracting model comprises receiving the image data of the environment as input, the visual domain textual prompt as condition, and the, in particular local, features as ground truth.

100

```
┌─────────┐              ┌ ─ ─ ─ ─ ┐
│  S102   │              │  S101   │
└────┬────┘              └ ─ ─┬─ ─ ┘
     │                        ┆
     ▼                        ▼
┌─────────┐    ┌─────────┐  ┌ ─ ─ ─ ─ ┐
│  S104   │───▶│  S106   │◀┄┤  S103   │
└────┬────┘    └────┬────┘  └ ─ ─ ─ ─ ┘
     ┄┄┄┄┄┄┄┄▶ ▼ ◀┄┄┄┄┄┄┄┄
           ┌─────────┐
           │  S108   │
           └────┬────┘
                ┆
                ▼
           ┌ ─ ─ ─ ─ ┐
           │  S110   │
           └ ─ ─ ─ ─ ┘
```

# Fig. 1

200

```
┌─────────┐
│  S202   │
└────┬────┘
     │
     ▼
┌─────────┐
│  S204   │
└─────────┘
```

# Fig. 2

**300**

312

302 306 301 316

314

304 308 303 310

**Fig. 3**

**400**

406

402

408

404 410

**Fig. 4**

Stable Diffusion

Fig. 5
(Prior Art)

EP 4 604 074 A1

EP 4 604 074 A1

Class prompt
A photo of <class> → CLIP$_{text}$ → Text Adapter → ClassEmbeddings

ClassEmbeddings

X → Encoder → $Z_0$ → Stable Diffusion UNet

Features and Cross-Attention maps → Task Specific Decoder → Prediction

Fig. 6
(Prior Art)

Fig. 7
(Prior Art)

Fig. 8

EP 4 604 074 A1

804

What weather condition is it? | Compute

Computation time on I  cpu:0.260s

sunny     812   0.588

0.556

cloudy

overcast    0.455

clear    0.380

good    0.069

# Fig. 9A

804

| What weather condition is it? | Compute |

Computation time on I        cpu:0.232s

sunny                                                      0.629

812

cloudy                                  0.290

overcast                                0.288

clear                                  0.228

good                                  0.072

# Fig. 9B

1004    300

1006

1002-1

**Fig. 10A**

300

1004    1002-2

**Fig. 10B**

Fig. 10C

## EUROPEAN SEARCH REPORT

Europäisches
Patentamt
European
Patent Office
Office européen
des brevets

**Application Number**

EP 24 15 7953

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG LVMIN ET AL: "Adding Conditional Control to Text-to-Image Diffusion Models", 2023 IEEE/CVF INTERNATIONAL CONFERENCE ON COMPUTER VISION (ICCV), IEEE, 1 October 2023 (2023-10-01), pages 3813-3824, XP034514821, DOI: 10.1109/ICCV51070.2023.00355 [retrieved on 2024-01-15] * sections 3., 3.1, 3.2, 3.3,; figures 2, 3; table 2 * | 1-15 | INV. G06V10/40 G06V10/82 G06V20/10 |
| A | DONGXU LI ET AL: "BLIP-Diffusion: Pre-trained Subject Representation for Controllable Text-to-Image Generation and Editing", ARXIV.ORG, CORNELL UNIVERSITY LIBRARY, 201 OLIN LIBRARY CORNELL UNIVERSITY ITHACA, NY 14853, 22 June 2023 (2023-06-22), XP091543988, * the whole document * | 1-15 | |

TECHNICAL FIELDS SEARCHED (IPC)

G06V
G06F

The present search report has been drawn up for all claims

| Place of search | Date of completion of the search | Examiner |
|---|---|---|
| The Hague | 5 July 2024 | Lepetit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. ROMBACH et al.** High-Resolution Image Synthesis with Latent Diffusion Models. *arXiv:2112.10752v2*
- **P. ESSER et al.** Taming Transformers for High-Resolution Image Synthesis. *arXiv:2012.09841*, vol. v3
- **W. ZHAO et al.** Unleashing Text-to-Image Diffusion Models for Visual Perception (VPD). *arXiv:2303.02153v1*
- **DAN ZHANG et al.** Anomaly-Aware Semantic Segmentation via Style-Aligned OoD Augmentation. *arXiv:2308.09965v1*
- **P. ESSER et al.** Taming Transformers for High-Resolution Image Synthesis. *arXiv:201 2.09841*, vol. v3
- **YONG ZHENG ONG et al.** VG-GAN: Conditional GAN Framework for Graphical Design Generation. *2022 IEEE International Conference on Image Processing (ICIP)*, 2022, 781-785
- **WENLIANG ZHAO et al.** Unleashing Text-to-Image Diffusion Models for Visual Perception. *arXiv:2303.02153*, vol. v1
- **L. ZHANG et al.** Adding Conditional Control to Text-to-Image Diffusion Models. *Computer Vision Foundation and IEEE Xplore*, 2023
- **JONATHAN HO et al.** Denoising Diffusion Probabilistic Models. *arXiv:2006.11239v2*
- **CHENLIANG LI et al.** mPLUG: Effective and Efficient Vision-Language Learning by Cross-modal Skip-connections. *arXiv:2205.12005v2*
- **SEONGUK et al.** *Learning to Optimize Domain Specific Normalization for Domain Generalization*
- **WENLIANG ZHAO et al.** Unleashing Text-to-Image Diffusion Models for Visual Perception. *arXiv:2303.02153 v1*
- **P. ESSER et al.** Taming Transformers for High-Resolution Image Synthesis. *arXiv:2012.09841v3*
- **YONG ZHENG ONG et al.** VG-GAN: Conditional GAN Framework for Graphical Design Generation. *2022 IEEE International Conference on Image Processing (ICIP), Bordeaux, France*, 2022, 781-785
- **SIMIAN LUO et al.** Latent Consistency Models: Synthesizing High-Resolution Images with Few-Step Inference. *arXiv:2310.04378v1*
- **SEONGUK SEO et al.** *Learning to Optimized Domain Specific Normalization for Domain Generalization*, 2020